# EUROPEAN PATENT APPLICATION

(11) **EP 2 213 991 A1**
(43) Date of publication of application: **04.08.2010**
(21) Application number: 10151905.6
(22) Date of filing: 28.01.2010
(51) Int. Cl.: G01G 3/04, G01G 19/52

(54) **Storage crate incorporating a weighing device**

(30) Priority: 29.01.2009 GB 0901503; 18.05.2009 GB 0908511
(71) Applicant: Consortia Products Ltd., 18 Ravenings Parade 39 Goodmayes Road Goodmayes Ilford IG3 9NR (GB)
(72) Inventor: Carr, Andrew, Hornchurch, Essex RM11 3SN (GB); Green, Terry, Grays, Essex RM16 6ES (GB); Cornish, David, Purleigh, Essex CM3 6PL (GB)
(74) Representative: Jenkins, Peter David

(57) **Abstract**

A storage crate having a base and a plurality of sidewalls extending upwardly from the base to define a storage cavity, and a weighing device for weighing contents disposed in the storage cavity, the weighing device comprising a vertically movable plate member disposed above and spaced from the base and forming a movable lowermost wall of the storage cavity, the plate member extending over at least a majority of the inner surface of the base, a plurality of compression springs biasing the movable plate member upwardly away from base, a plurality of tension elements connected between the movable plate member and another part to hold the movable plate member at a desired upper position when in the unloaded state, and a weight indicator connected to the movable plate member, the weight indicator being mounted on an outer surface of one of the sidewalls, and the weight indicator being adapted to respond to changes in vertical position of the vertically movable plate member.

## Description

The present invention relates to a storage crate incorporating a weighing device.

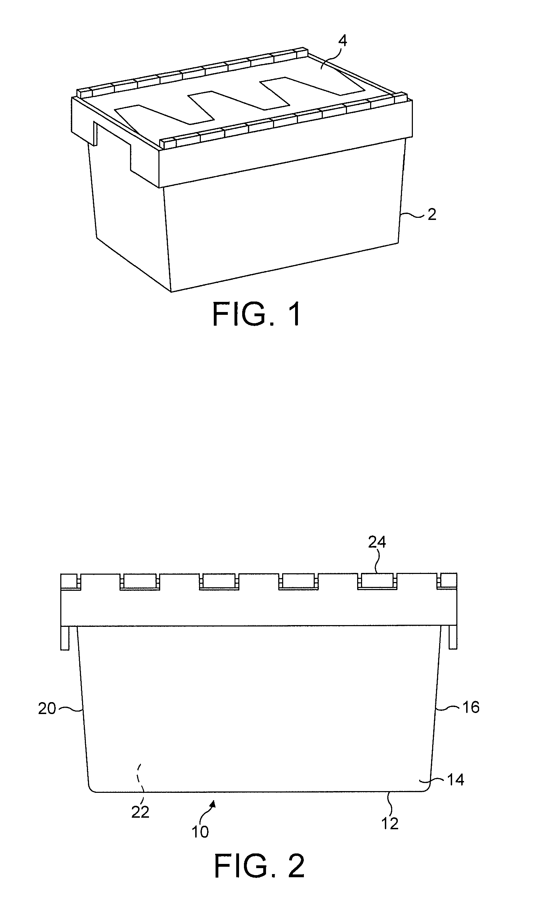

In the UK and Europe, office and commercial relocation companies use plastic crates to transport papers, filing and personal effects from building to building or internally within the same building. Such a known crate is illustrated in Figure 1. The crate 2 has an integral interlocking lid 4. Accordingly, after the crate 2 has been packed with contents and the lid 4 has been closed, the user has no idea of the precise nature of the contents, in particular the weight of the contents. Before lifting the crate, the user therefore does not know whether the crate will be heavy or light in weight, and this lack of information can (and does) lead to injuries if the user lifts an overpacked or unexpectedly heavy crate.

From a health and safety perspective, a crate showing an approximate weight would provide an insurance to the employer that their staff would not be at risk of injury when moving or transporting the crates.

The state of the art includes a number of different prior proposals for containers incorporating a built-in weighing scale.

US-A-7,161,097 discloses a container with a built-in scale. The container is typically a suitcase although it may comprise a stackable bin or a tub. A scale is mounted on the planar bottom of the container. It is disclosed that the scale can be any conventional weighing mechanism which utilises mechanical sensing mechanisms, levers, springs and multiple moving parts as part of their design or alternatively an electronic means to provide a digital read-out, for example incorporating a sensing device such as a transducer load cell assembly, a piezoelectric sensor or an electromechanical actuator.

US-A-7,151,231 discloses a combined suitcase and weighing scale in which a weight determining mechanism is disposed in a cavity within the suitcase and incorporating a mechanism for electronically displaying the weight of the item.

US-A-2005/0217903 discloses a luggage device with a built-in load determination component comprising a spring in a mechanical scale, a strain gauge or a load cell for measuring weight in the luggage. The preferred embodiment incorporates an electronic load determination means.

US-A-2005/0217904 discloses a container such as luggage or a shipping crate, with a built-in weighing device for displaying the weight of the container. The weighing device comprises a plurality of weight sensors which are attached to the bottom of the luggage device and act as legs when the luggage device is standing upright. The sensors are connected electrically to an electrical display screen.

Despite this large number of prior proposals of containers incorporating built-in weighing scales, none of them is particularly suitable for providing a storage crate incorporating a weighing device which not only has low manufacturing costs, for incorporation into a new storage crate or alternatively retrofitting into a storage crate, and which has the required durability and reliability when subjected to robust handling and varied ambient conditions in use. Furthermore, electronic devices suffer from the problem that battery life is limited and storage crates are sometimes required to be stored for very long periods of time. Also, it is desirable to have a weighing device which can reliably provide a continuous indication of the weight of the contents of the storage crate.

The present invention aims at least partially to overcome these problems of the know containers incorporating a built-in scale.

Accordingly, the present invention provides a storage crate having a base and a plurality of sidewalls extending upwardly from the base to define a storage cavity, and a weighing device for weighing contents disposed in the storage cavity, the weighing device comprising a vertically movable plate member disposed above and spaced from the base and forming a movable lowermost wall of the storage cavity, the plate member extending over at least a majority of the inner surface of the base, a plurality of compression springs biasing the movable plate member upwardly away from base, a plurality of tension elements connected between the movable plate member and another part to hold the movable plate member at a desired upper position when in the unloaded state, and a weight indicator connected to the movable plate member, the weight indicator being mounted on an outer surface of one of the sidewalls, and the weight indicator being adapted to respond to changes in vertical position of the vertically movable plate member.

In some embodiments, the another part comprises the base.

In other embodiments, the another part comprises a lower plate member disposed between the base and the movable plate member, the plurality of compression springs and the tension elements being disposed between the lower plate and the movable plate member.

Optionally, the movable plate member has a lowered central portion and a plurality outer raised portions, each raised portion being located adjacent to a respective compression spring. Further optionally, the lowered central portion is adapted to engage either the base or, when provided the lower plate, in a fully loaded configuration.

In other embodiments, each compression spring is received in a respective tube fixed to the storage crate, and is disposed between a lower fixed wall and an upper slider received in the tube, and each tension element is mounted between the movable plate member and a respective slider.

Typically, each compression spring is disposed at a respective corner of the crate in a respective tube integrally moulded with the sidewalls.

Optionally, each tube is provided with a downwardly extendable telescoping element at the lower end of the tube.

Preferably, the weight indicator further comprises a rotatable needle mounted on a pivot, the needle being rotatably connected to an arm extending from the movable plate member.

The present invention further provides a storage crate having a base and a plurality of sidewalls extending upwardly from the base to define a storage cavity, and a weighing device for weighing any contents disposed in the storage cavity, the weighing device comprising a hollow pneumatic bag which extends over at least a majority of the inner surface of the base, a hollow tube having a first end pneumatically connected to the hollow bag, and a weight indicator pneumatically connected to a second end of the hollow tube, and the weight indicator being adapted to respond to changes in pneumatic pressure within the bag.

Preferably, the weight indicator is mounted on an outer surface of one of the sidewalls.

Preferably, the weight indicator includes a display adapted to indicate successive weight bands. The display may be a colour coded display with different colours indicating respective weight bands. Optionally, one weight band may indicate a safe load and another weight band may indicate a dangerous load. Preferably, at least one further weight band indicates a take-care load between the safe load and the dangerous load.

The display may include a dial incorporating a rotatable needle.

The weight indicator is preferably disposed within a recess surrounded by an annular protecting wall. Optionally, the weight indicator is disposed at an upper corner of the outer surface of the sidewall.

Preferably, the hollow pneumatic bag is substantially planar.

The hollow pneumatic bag may be removably disposed on the inner surface of the base.

Preferably, the storage crate further comprises a lid for covering the storage cavity, the lid comprising first and second interlocking lid members each hingedly attached to an upper edge of a respective one of two opposed sidewalls.

The preferred embodiments of the present invention can provide a storage crate incorporating a built-in weighing device which can overcome the problems of the known devices summarised above.

Since the device incorporates a pneumatic bag as a pressure sensor within the storage crate, no electrical components or power source are required. The device can reliably indicate the weight of the loaded contents of the storage crate continuously for an indeterminate period of time. Since the bag extends over substantially the entire surface area of the base, any contents loaded anywhere within the crate would be reliably detected, and the pressure equalisation of air within the bag ensures that the load is evenly spread over the base of the crate. Also, the bag would act to cushion the contents against impacts.

The pneumatic weight detection system has low manufacturing costs, for incorporation into a new storage crate or alternatively retrofitting into an existing storage crate. The pneumatic weight detection system has a high degree of durability and reliability when subjected to robust handling and varied ambient conditions in use.

Embodiments of the present invention will now be described, by way of example only, with reference to the accompanying drawings, in which:
Figure 1 is a perspective view of a known storage crate;
Figure 2 is a schematic side view of a storage crate in accordance with a first embodiment of the present invention;
Figure 3 is a schematic end view of the storage crate of Figure 2;
Figure 4 is a schematic sectional view through the storage crate of Figure 2;
Figure 5 illustrates an example of a weight indicator display for use in the weighing device of the storage crate of Figure 2.
Figure 6 is a schematic plan view, partly in phantom, of a storage crate in accordance with a second embodiment of the present invention;
Figure 7 is a schematic sectional view along line A-A, partly in phantom, through the storage crate of Figure 6; and
Figure 8 illustrates a first modification to the storage crate of Figure 6;
Figures 9 and 10 illustrate a second modification to the storage crate of Figure 6;
Figure 11 is a schematic plan view, partly in phantom, of a storage crate in accordance with a third embodiment of the present invention; and
Figure 12 is a schematic sectional view along line A-A through the storage crate of Figure 11.

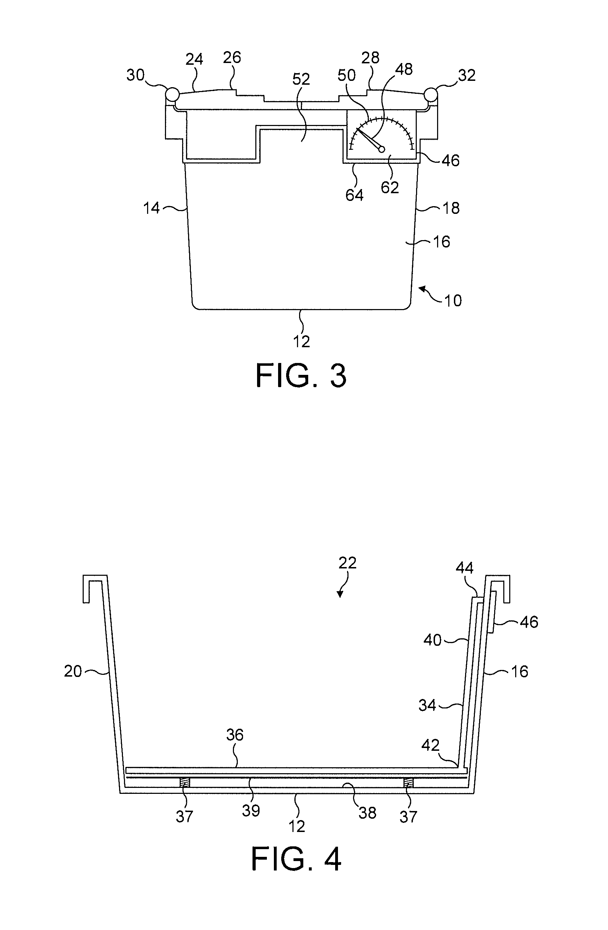

Referring to Figures 2 to 4, a storage crate 10 is accordance with a first embodiment of the present invention is schematically illustrated. The storage crate 10 has a base 12 and a plurality of sidewalls 14, 16, 18, 20 extending upwardly from the base 12 to define a storage cavity 22. Typically, the storage crate 10 has a rectangular shape, with a rectangular base and rectangular sidewalls. The storage crate 10 is typically composed of plastic, and is typically injection moulded. The storage crate 10 further comprises a lid 24 for covering the storage cavity 22. The lid 24 comprises first and second interlocking lid members 26, 28 each hingedly attached to an upper edge 30, 32 of a respective one of two opposed sidewalls 14, 18. The storage crates 10 are structured so as to be stackable, one on top of another, with the base 12 of an upper storage crate 10 mating with the lid 24 of a lower storage crate 10.

In accordance with the present invention, a weighing device 34 is provided for weighing any contents disposed in the storage cavity 22. The weighing device 34 comprises a hollow pneumatic bag 36 which is substantially planar and extends over at least a majority, preferably substantially the entirety, of the inner surface 38 of the base 12. 9. The bag 36 may lie directly against the inner surface 38 or may be separated therefrom by spacers 37 and optionally supported on a coextensive support plate 39. The hollow pneumatic bag 36 is preferably removably disposed on the inner surface 38 of the base 12. The bag 36 is composed of a flexible material, which is fluid-tight (e.g. air-tight), such as an elastomeric material. The hollow bag 36 is composed of a durable material, with the walls of the bag being puncture resistant and retaining their flexible and air-tight properties over a long lifetime, typically at least 10 years, and over a range of ambient temperatures to which the storage crate is likely to be subjected in use.

A hollow tube 40, also typically composed of an elastomeric material, has a first end 42 pneumatically connected to the hollow bag 36. The hollow tube 40 is typically within the cavity 22. The hollow tube 40 may be flexible or rigid, and may be protected within a rigid enclosure. A second end 44 of the hollow tube 40 is pneumatically connected to a weight indicator 46. The weight indicator 46 is adapted to respond to changes in pneumatic pressure within the bag 36. The bag 36 and tube 40 contain a fluid, such as a gas, for example air, or a liquid, which is hermetically sealed within the pneumatic system. Preferably the fluid is air. The fluid may be pressurised within the pneumatic system, or simply present therein at atmospheric pressure when the system is in an unloaded state.

As contents are loaded into the cavity 22, the progressively increasing weight of the contents increases the load on the hollow bag 36, which increases the pneumatic pressure within the bag 36. The increased pressure is transmitted via the tube 40 to the weight indicator 46, and causes an indication of the weight of the contents to be displayed by an indication element 48 relative to a display 50. Typically, the display 50 includes a graduated dial incorporating a rotatable needle as the indication element 48.

The weight indicator 46 is mounted on an outer surface 52 of one of the sidewalls 16, preferably an end sidewall 16 of the rectangular crate 10. Accordingly, the weight indicator 46 can be viewed by a user when the crate 10 is loaded and the lid 24 is closed.

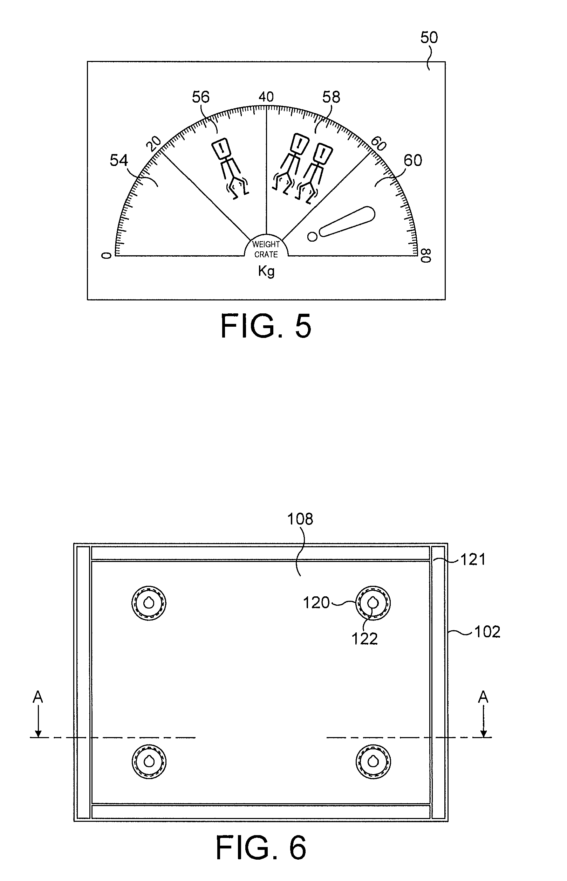

Referring to Figure 5, the display 50 may be adapted to indicate successive weight bands 54, 56, 58 60. The display 50 may be a colour coded display with different colours indicating respective weight bands 54, 56, 58, 60. For example, one weight band 54, optionally coloured green, indicates a safe load and another weight band 60 optionally coloured red, indicates a dangerous load. At least one further weight band 56, 58, optionally coloured yellow or orange, indicates a take-care load between the safe load and the dangerous load. Such a "traffic-light" indication system is easy to see and comprehend, even under low levels of ambient light. As illustrated, the display 50 may optionally incorporate a numerical scale of measured load, for example in kilograms, and/or icons representative of the load band, for example indicating how many persons are required safely to lift the loaded storage crate 10.

In order to provide adequate mechanical protection for the weight indication against inadvertent damage, the weight indicator 46 is disposed within a recess 62, surrounded by an annular protecting wall 64, on the end sidewall 16 of the rectangular crate 10. The weight indicator 46 is typically disposed at an upper corner of the outer surface of the sidewall 16, which enhances the visibility of the weight indicator 46.

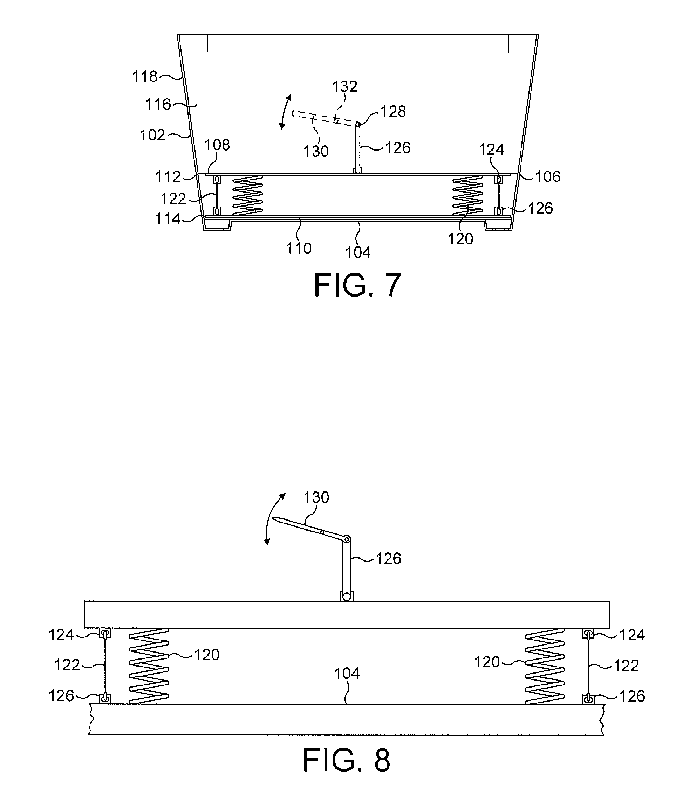

Referring to Figures 6 and 7, there is shown a storage crate 102 in accordance with a second embodiment of the present invention. Above the base 104 of the storage crate 102 is located a weighing device 106. The weighing device 106 comprises upper and lower plates 108, 110 which are planar and each has a peripheral edge 112,114 shaped so as to fit within the interior space 116 defined by the sidewalls 118 of the storage crate 102. The lower plate 110 rests on the base 104 and the upper plate 118 is spaced a particular distance, in the unloaded state, above the lower plate 110 and is held at the particular distance by the combination of helical compression springs 120 located between the plates 108,110 and tension elements in the form of flexible restraining wires 122 which are fitted between upper and lower clamps 124,126 respectively provided on the opposed surfaces of the upper and lower plates 118,110. Typically, there are four compression springs 120, each located inwardly of a respective corner 121 of the storage crate 102. A corresponding number of restraining wires 122 may be provided, each associated with the respective compressive spring 120.

The compression springs 120 bias the vertically movable upper plate 108 upwardly away from the lower plate 110 and the restraining wires 122 ensure that the two plates 108, 110, in such biased configuration when the storage crate 102 is in an unloaded configuration, is held at an equal distance over the whole base surface of the crate away from the lower plate 110.

A weighing indicator comprises an upwardly directed arm 126 which is fitted to the upper plate 108 and is connected at a pivot 128 to an indicating needle 130 which is mounted to a sidewall 118 of the storage crate 102 at a second pivot 132 so that the indicating needle 130 is located at an external face of the respective sidewall 118.

When the storage crate 102 is loaded, the weight of the contents pushes the upper plate 108 downwardly against the bias of the compression springs 120 and the spring force and spring rate are such that the load is spread equally over the surface are of the upper plate 108 so that when depressed under the load the upper plate 108 remains substantially horizontal and parallel to the lower plate 110 and correspondingly to the base 104. Such downward urging of the upper plate 108 causes the arm 126 to move downwardly which correspondingly causes the indicating needle 130 to pivot about pivot point 132 as a result of the pivotal action at pivot 128. This causes the indicating needle 130 to move relative to an indicator display (not shown) on the external surface of the sidewall 118 so as to indicate the load, the display being as described hereinabove with respect to the first embodiment.

In a medication of the second embodiment as shown in Figure 8, the lower plate may be omitted and the compression springs 120 may rest directly on the base 104 of the storage crate 102 and the lower clamps 126 may be fitted directly to the base 104 of the storage crate 102.

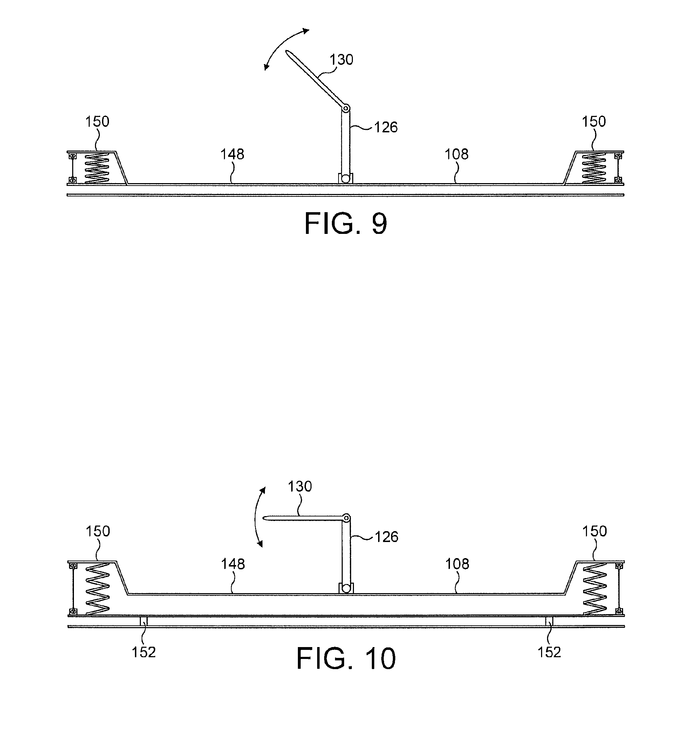

In a further modification of the second embodiment as shown in Figures 9 and 10, the upper plate 108 is not planar but instead includes a lowered central portion 148 and raised portions 150 each associated with the location of a respective compression spring 120. This provides that although the bottom surface within the storage crate to receive a load is not entirely planar, nevertheless the volume of the storage crate is increased as compared to the structure shown in Figures 6 and 7.

In this modification, when the upper plate 108 is pushed downwardly against the bias of the compression springs 120 to its full extent so as to be in a fully loaded configuration carrying the maximum weight permitted, the major surfaces of the upper and lower plates 108,110 may be in engagement.

The lower plate 110 may, in this second embodiment and in any modification when present, be held a particular distance, for example 10mm, spaced above the internal surface of the base 104 of the storage crate 102, for example by spacers 152.

Typically, a maximum vertical distance for moving the upper plate 108 between its unloaded and fully loaded conditions is about 54mm.

In an alternative modification, the lower plate 110 may be provided with cut-outs in the vicinity of the compression springs 120 so that the compression springs 120are urged against the inner surface of the base 104 and the lower surface the lower plate 110 is provided spaced at a particular distance above the surface of the base 104.

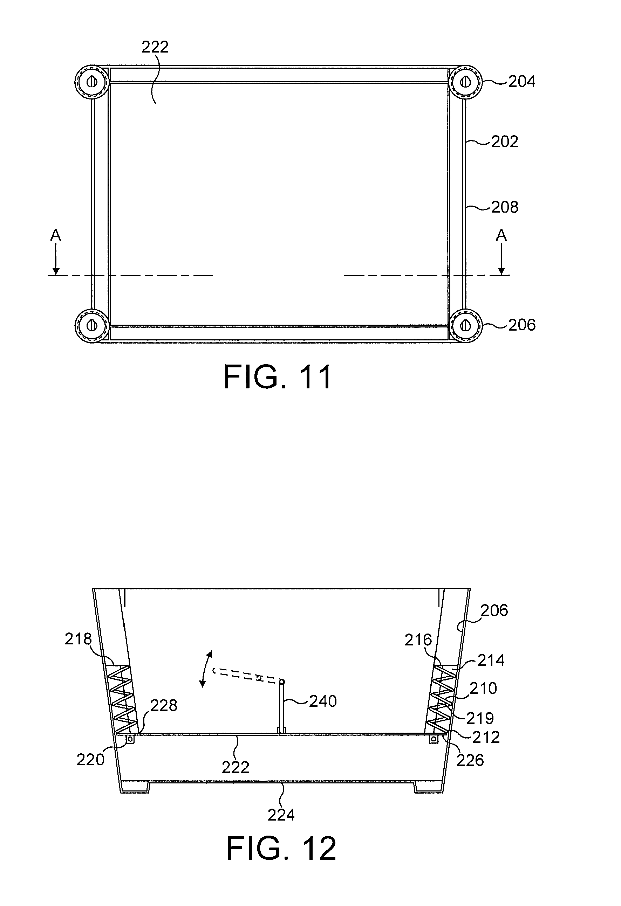

A further embodiment of a storage crate 202 in accordance with the present invention is illustrated in Figures 11 and 12. In this embodiment, each corner 204 of the storage crate 202 is provided with a substantially vertically oriented tube 206, which as illustrated may be inclined to the vertical. Each tube 206 may be integrally molded with the sidewalls 208 of the storage crate 202. Each tube 206 has received therein a respective helical compression spring 210. The lower end 212 of each compression spring 210 is fixedly mounted with respect to the tube 206. The upper end 214 of each helical compression spring 210 is biased against a movable slider 216 which is received, together with the spring 210, for sliding movement within the tube 206.

In each tube 206 a tension element in the form of a flexible cable 219 is provided, which is clamped at its upper end 218 to the movable slider 216 and at its lower end 220 to a vertically movable base plate member 222 located above the base 224 of the storage crate 202 and having a peripheral edge 226 slidably fitting within the sidewalls 208 of the storage crate 202.

In the unloaded configuration, as shown in Figure 12, the plate member 222 is urged upwardly by the bias of the compression springs 210 into engagement with the lower edge 228 of each tube 206 and is typically spaced about 54 mm above the base 224 of the storage crate 202. As the storage crate 202 is progressively loaded with contents, the weight of the contents pushes the plate member 222 downwardly against the bias of the compression springs 210. The cables 219 are pulled downwardly, correspondingly pulling downwardly the movable slider 216 in each tube 206 against the bias of the respective compression spring 210.

As in the previous embodiments, an indicator 240 is connected to the movable plate member 222 so as to indicate the load within the storage crate 202.

If desired, one or more additional tubular members may be provided in, or associated with, the lower end of each tube 206 to provide for a telescoping effect of the lower edge of the tube 206 as the plate member 222 is urged downwardly, to ensure that the cable 219 is always concealed within the tube 206 or its telescopic extensions.
It would be apparent to the skilled person that various modifications to the illustrated embodiment may be made within the scope of the invention. For example, different shapes and dimensions of the crate may be employed. The display may be varied, and the weight indicator may be located elsewhere on the crate. The bag may comprise a plurality of segments, of various shape and dimensions, commonly pneumatically connected to the weight indicator.

## Claims

1. A storage crate having a base and a plurality of sidewalls extending upwardly from the base to define a storage cavity, and a weighing device for weighing contents disposed in the storage cavity, the weighing device comprising a vertically movable plate member disposed above and spaced from the base and forming a movable lowermost wall of the storage cavity, the plate member extending over at least a majority of the inner surface of the base, a plurality of compression springs biasing the movable plate member upwardly away from base, a plurality of tension elements connected between the movable plate member and another part to hold the movable plate member at a desired upper position when in the unloaded state, and a weight indicator connected to the movable plate member, the weight indicator being mounted on an outer surface of one of the sidewalls, and the weight indicator being adapted to respond to changes in vertical position of the vertically movable plate member.

2. A storage crate according to claim 1 wherein the weight indicator includes a display adapted to indicate successive weight bands.

3. A storage crate according to claim 2 wherein the display is a colour coded display with different colours indicating respective weight bands.

4. A storage crate according to claim 2 or claim 3 wherein one weight band indicates a safe load and another weight band indicates a dangerous load.

5. A storage crate according to claim 4 wherein at least one further weight band indicates a take-care load between the safe load and the dangerous load.

6. A storage crate according to any one of claims 1 to 5 wherein the weight indicator includes a rotatable needle.

7. A storage crate according to any one of claims 1 to 6 wherein the weight indicator is mounted on an outer surface of one of the sidewalls.

8. A storage crate according to any one of claims 1 to 7 wherein the another part comprises the base.

9. A storage crate according to any one of claims 1 to 7 wherein the another part comprises a lower plate member disposed between the base and the movable plate member, the plurality of compression springs and the tension elements being disposed between the lower plate and the movable plate member.

10. A storage crate according to any one of claims 1 to 9 wherein the movable plate member has a lowered central portion and a plurality outer raised portions, each raised portion being located adjacent to a respective compression spring.

11. A storage crate according to claim 10 wherein the lowered central portion is adapted to engage either the base or, when provided the lower plate, in a fully loaded configuration.

12. A storage crate according to any one of claims 1 to 7 wherein each compression spring is received in a respective tube fixed to the storage crate, and is disposed between a lower fixed wall and an upper slider received in the tube, and each tension element is mounted between the movable plate member and a respective slider.

13. A storage crate according to claim 12 wherein each compression spring is disposed at a respective corner of the crate in a respective tube integrally moulded with the sidewalls.

14. A storage crate according to claim 12 or claim 13 wherein each tube is provided with a downwardly extendable telescoping element at the lower end of the tube.

15. A storage crate any one of claims 1 to 14 wherein the weight indicator further comprises a rotatable needle mounted on a pivot, the needle being rotatably connected to an arm extending from the movable plate member.
